# EUROPEAN PATENT APPLICATION

(11) **EP 4 679 542 A1**
(43) Date of publication of application: **14.01.2026**
(21) Application number: 24785038.1
(22) Date of filing: 28.02.2024
(51) Int. Cl.: H01M 8/04119

(54) **CARTRIDGE FOR FUEL CELL HUMIDIFIER, AND FUEL CELL HUMIDIFIER**

(30) Priority: 07.04.2023 KR 20230046157
(71) Applicant: Kolon Industries, Inc., Seoul 07793 (KR)
(72) Inventor: KIM, Do Woo, Seoul 07793 (KR); HER, Jung Kun, Seoul 07793 (KR); KI, Sung Kwan, Seoul 07793 (KR)
(74) Representative: Vossius & Partner Patentanwälte Rechtsanwälte mbB
(86) International application number: PCT/KR2024/002545
(87) International publication number: WO 2024/210328

(57) **Abstract**

The present invention relates to a cartridge for a fuel cell humidifier, and to a fuel cell humidifier, the cartridge comprising: an inner case having openings at both ends; and a hollow fiber membrane bundle inside the inner case, wherein the inner case comprises: a first variable case having an inner inlet through which a first gas flows in; a second variable case distanced from the first variable case along the first axial direction and having an inner outlet through which the first gas is discharged; and a central case to which at least one of the first and second variable cases movably couples.

## Description

### [Technical Field]

The present invention relates to a fuel cell humidifier for supplying a humidified gas to a fuel cell.

### [Background Art]

Fuel cells have advantages of being able to continuously produce electricity as long as hydrogen and oxygen are supplied and having efficiency that is about twice that of an internal combustion engine because they have no heat loss, unlike general chemical cells such as dry cells or storage cells.

Further, since chemical energy generated through coupling between hydrogen and oxygen is directly converted into electrical energy, emission of pollutants is reduced. Therefore, the fuel cells have advantages of being environmentally friendly and being able to reduce concerns about resource depletion due to increased energy consumption.

These fuel cells may be roughly classified into a polymer electrolyte membrane fuel cell (PEMFC), a phosphoric acid fuel cell (PAFC), a molten carbonate fuel cell (MCFC), a solid oxide fuel cell (SOFC), and an alkaline fuel cell (AFC) depending on the type of electrolyte used.

These fuel cells fundamentally operate according to the same principle but differ from one another in terms of the type of fuel used, an operating temperature, a catalyst, an electrolyte, or the like. Among the fuel cells, the PEMFC is known to be the most promising not only for small-scale stationary power generation equipment but also for transportation systems because the PEMFC operates at a lower temperature than other fuel cells and can be miniaturized due to a high output density.

One of the most important factors in improving the performance of the PEMFC is to maintain moisture content by supplying a certain amount or more of moisture to a polymer electrolyte membrane (or proton exchange membrane: PEM) of a membrane electrode assembly (MEA). This is because the efficiency of power generation is rapidly degraded when the polymer electrolyte membrane is dried.

Examples of a method for humidifying the polymer electrolyte membrane include: 1) a bubbler humidification scheme for filling a pressure-resistant container with water and then passing a target gas through a diffuser to supply moisture; 2) a direct injection scheme for calculating a moisture supply amount required for a fuel cell reaction and directly supplying moisture to a gas flow pipe through a solenoid valve; and 3) a humidification membrane scheme for supplying moisture to a fluidized gas layer using a polymer separation membrane.

Among these, the membrane humidification scheme for humidifying a polymer electrolyte membrane by providing water vapor to air supplied to the polymer electrolyte membrane using a membrane that selectively allows only water vapor contained in an off-gas to pass through is advantageous in that a weight and size of a humidifier can be reduced.

A selective permeable membrane used in the membrane humidification scheme is preferably a hollow fiber membrane having a large permeable area per unit volume when a module is formed. That is, when a humidifier is manufactured using hollow fiber membranes, there are advantages that high integration of the hollow fiber membranes with a large contact surface area is possible so that a fuel cell can be sufficiently humidified even with a small capacity, low-cost materials can be used, and moisture and heat contained in an off-gas discharged with a high temperature from the fuel cell can be recovered and can be reused through the humidifier.

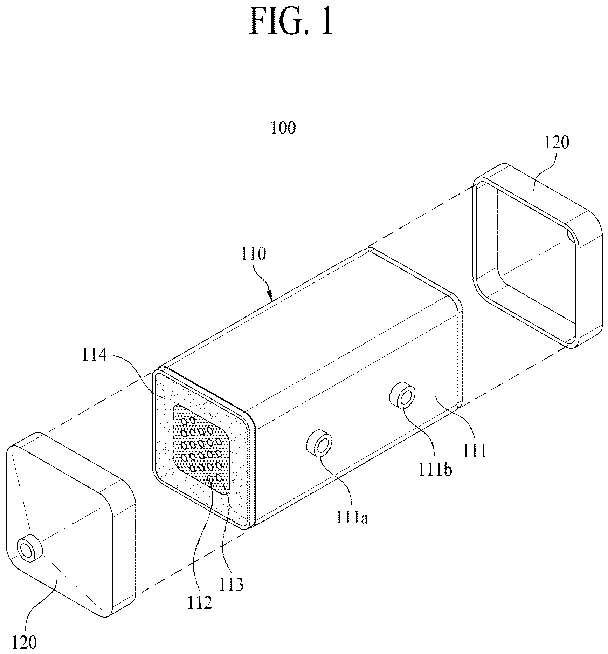

FIG. 1 is a schematic exploded perspective view of a typical fuel cell humidifier.

As illustrated in FIG. 1, a typical membrane humidification type humidifier 100 includes a humidification module 110 in which moisture exchange occurs between air supplied from the outside and an off-gas discharged from a fuel cell stack (not illustrated) and caps 120 coupled to both ends of the humidification module 110.

One of the caps 120 delivers air supplied from the outside to the humidification module 110, and the other delivers air humidified by the humidification module 110 to the fuel cell stack.

The humidification module 110 includes a mid-case 111 having an off-gas inlet 111a and an off-gas outlet 111b and a plurality of hollow fiber membranes 112 in the mid-case 111. Both ends of the hollow fiber membranes 112 are potted to a fixing layer 113. The fixing layer 113 is generally formed by curing a liquid polymer such as a liquid polyurethane resin through a casting scheme. The fixing layer 113 to which the ends of the hollow fiber membranes 112 are potted and a resin layer 114 between the fixing layer 113 and the mid-case 111 block inner spaces of the caps 120 from an inner space of the mid-case 111. Like the fixing layer 113, the resin layer 114 is generally formed by curing a liquid polymer such as a liquid polyurethane resin through a casting scheme.

Air supplied from the outside flows along hollows of the hollow fiber membranes 112. An off-gas flowing into the mid-case 111 through the off-gas inlet 111a comes into contact with outer surfaces of the hollow fiber membranes 112 and then flows out from the mid-case 111 through the off-gas outlet 111b. When the off-gas comes into contact with the outer surfaces of the hollow fiber membranes 112, moisture contained in the off-gas permeates through the hollow fiber membranes 112, thereby humidifying the air flowing along the hollows of the hollow fiber membranes 112.

In recent years, with the use of fuel cells in various places of use, there has been demand for fuel cell humidifiers to also have various humidification capabilities. Therefore, there is an urgent need for development of a fuel cell humidifier that can have various humidification capabilities that fuel cells require.

### [Disclosure]

### [Technical Problem]

The present invention has been devised to address the above-described demand and is directed to providing a cartridge for a fuel cell humidifier and the fuel cell humidifier capable of having various humidification capabilities that fuel cells require.

### [Technical Solution]

To achieve the above objective, the present invention may include the following configurations.

A cartridge for a fuel cell humidifier according to the present invention is provided in a fuel cell humidifier that uses a wet gas to humidify a dry gas to be supplied to a fuel cell stack, the cartridge including: an inner case having openings at both ends; and a hollow fiber membrane bundle placed in the inner case. The inner case may include: a first variable case in which an inner inlet for inflow of a first gas is formed; a second variable case disposed apart from the first variable case in a first axial direction and in which an inner outlet for outflow of the first gas is formed; and a central case to which at least one of the first variable case and the second variable case is movably coupled.

A fuel cell humidifier according to the present invention may include: a humidification module using a wet gas to humidify a dry gas to be supplied to a fuel cell stack; a first cap coupled to one end of the humidification module; and a second cap coupled to the other end of the humidification module. The humidification module may include a mid-case of which both ends are open and at least one cartridge accommodated inside the mid-case. The cartridge may include an inner case having openings at both ends; and a hollow fiber membrane bundle placed in the inner case. The inner case may include: a first variable case in which an inner inlet for inflow of a first gas is formed; a second variable case disposed apart from the first variable case in a first axial direction and in which an inner outlet for outflow of the first gas is formed; and a central case to which at least one of the first variable case and the second variable case is movably coupled.

### [Advantageous Effects]

A fuel cell humidifier of the present invention can be implemented to have various humidification capabilities according to a residence time during which a gas resides inside an inner case. Therefore, the present invention can improve versatility that allows application to fuel cells used in various places of use.

Even when the humidification performance that a place of use requires changes, a fuel cell humidifier of the present invention can have humidification performance corresponding to the humidification performance required by the place of use through changing a relative coupling position of at least one of a first variable case and a second variable case to a central case, without a need to newly develop or fabricate a mold for manufacturing the central case, the first variable case, and the second variable case. That is, the fuel cell humidifier of the present invention can be implemented so that the central case, the first variable case, and the second variable case are used in common in various places of use. Therefore, the fuel cell humidifier according to the present invention can be implemented to have humidification performance required by a place of use while reducing manufacturing costs.

### [Description of Drawings]

FIG. 1 is a schematic exploded perspective view of a typical fuel cell humidifier.
FIG. 2 is a schematic exploded perspective view of a fuel cell humidifier according to the present invention.
FIG. 3 is a schematic exploded cross-sectional view of the fuel cell humidifier according to the present invention along line I-I of FIG. 2.
FIG. 4 is a schematic coupling cross-sectional view of the fuel cell humidifier according to the present invention along line I-I of FIG. 2.
FIGS. 5 and 6 are schematic plan views of a cartridge of the fuel cell humidifier according to the present invention.
FIGS. 7 to 9 are schematic plan views for describing a process in which humidification performance of the cartridge of the fuel cell humidifier according to the present invention is adjusted.
FIGS. 10 to 12 are schematic side cross-sectional views of a first limiting portion of the cartridge of the fuel cell humidifier according to the present invention along line II-II of FIG. 7 that are shown by enlarging portion A of FIG. 7.
FIGS. 13 to 15 are schematic side cross-sectional views of a second limiting portion of the cartridge of the fuel cell humidifier according to the present invention along line II-II of FIG. 7 that are shown by enlarging portion B of FIG. 7.

### [Best Modes]

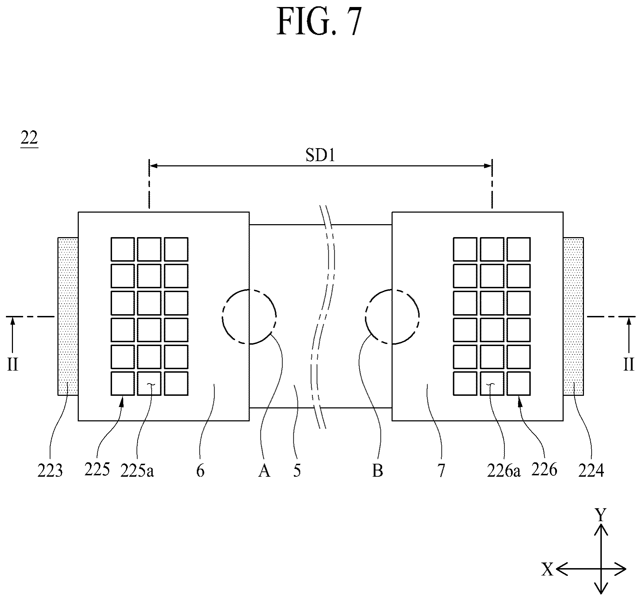

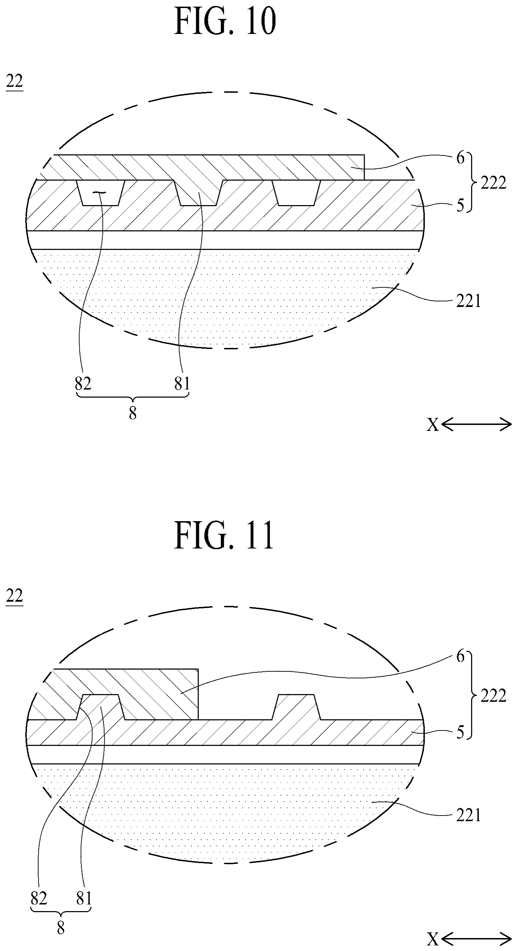

Hereinafter, embodiments of a fuel cell humidifier according to the present invention will be described in detail with reference to the accompanying drawings. A cartridge of the fuel cell humidifier according to the present invention may be included in the fuel cell humidifier according to the present invention and thus will be described together in the description of the fuel cell humidifier according to the present invention. Meanwhile, in FIGS. 7 to 9, two parallel one-dot chain lines are break lines. In FIGS. 10 to 15, a hollow fiber membrane bundle is briefly shown with dotted hatching.

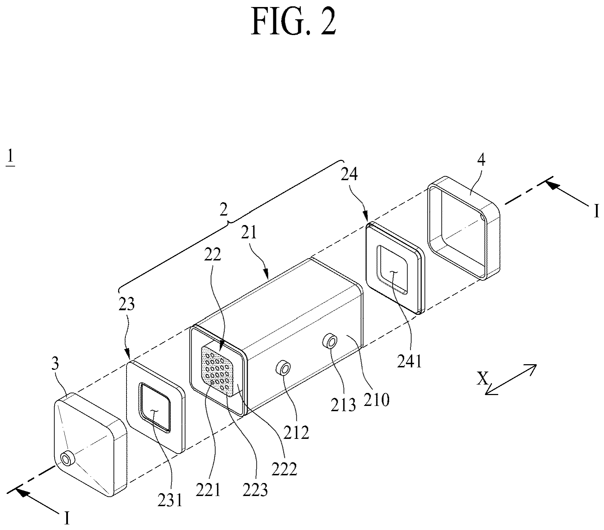

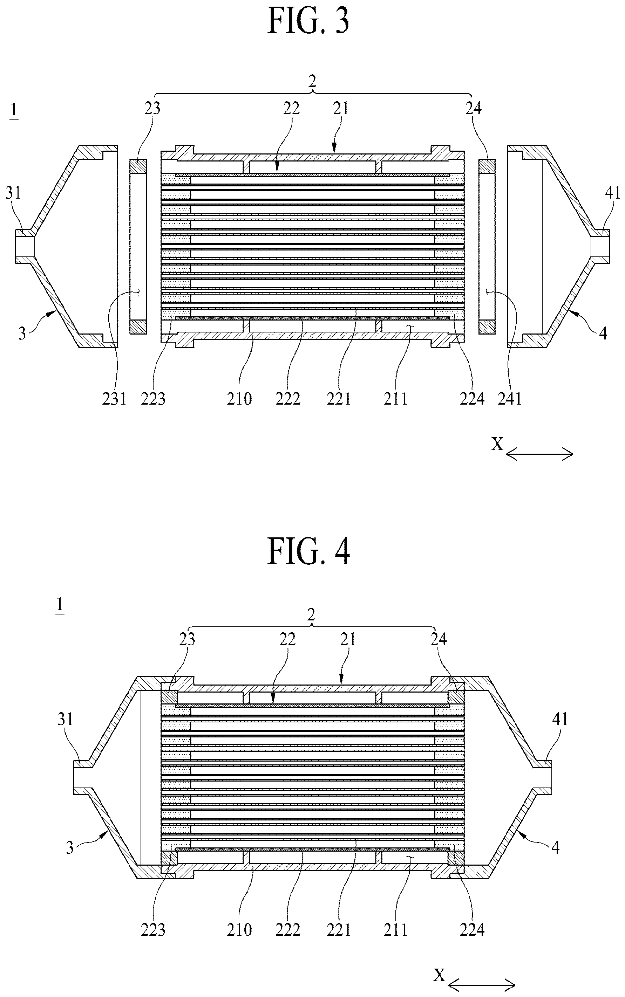

Referring to FIGS. 2 to 4, a fuel cell humidifier 1 according to the present invention uses a wet gas to humidify a dry gas to be supplied to a fuel cell stack (not illustrated). The wet gas may be a gas discharged from the fuel cell stack. The dry gas may be a fuel gas or air. The dry gas may be supplied to the fuel cell stack after being humidified by the wet gas. The fuel cell humidifier 1 according to the present invention includes a humidification module 2 for humidifying the dry gas, a first cap 3 coupled to one end of the humidification module 2, and a second cap 4 coupled to the other end of the humidification module 2.

Referring to FIGS. 2 to 4, the humidification module 2 humidifies the dry gas. The first cap 3 may be coupled to the one end of the humidification module 2. The second cap 4 may be coupled to the other end of the humidification module 2. The humidification module 2 may use a first gas and a second gas to supply a humidified dry gas to the fuel cell stack. When the first gas is a dry gas, the second gas may be a wet gas. In this case, the first gas may be supplied to the fuel cell stack after being humidified by the second gas. When the first gas is a wet gas, the second gas may be a dry gas. In this case, the second gas may be supplied to the fuel cell stack after being humidified by the first gas.

The humidification module 2 includes a mid-case 21 and at least one cartridge 22.

The cartridge 22 is coupled to the mid-case 21. The cartridge 22 may be accommodated inside the mid-case 21. Both ends of the mid-case 21 are open. In this case, an accommodation hole 211 may be formed in the mid-case 21. The accommodation hole 211 may be formed to pass through the mid-case 21 in a first axial direction (X-axis direction). At least one cartridge 22 may be disposed in the accommodation hole 211.

The mid-case 21 may include a mid-main body 210. The mid-main body 210 accommodates the cartridge 22. The cartridge 22 may be accommodated in the mid-main body 210 by being disposed inside the mid-main body 210. At least one cartridge 22 may be accommodated in the mid-main body 210. The accommodation hole 211 may be formed to pass through the mid-main body 210 in the first axial direction (X-axis direction).

The mid-case 21 may include a mid-inlet 212 and a mid-outlet 213. The mid-inlet 212 may allow the first gas to flow into the mid-main body 210. The mid-outlet 213 may allow the first gas to flow out from inside the mid-main body 210. The mid-outlet 213 and the mid-inlet 212 may each protrude from the mid-main body 210. The mid-outlet 213 and the mid-inlet 212 may be disposed apart from each other in the first axial direction (X-axis direction). The mid-outlet 213, the mid-inlet 212, and the mid-main body 210 may also be integrally formed.

The cartridge 22 is disposed inside the mid-case 21. The cartridge 22 may be accommodated in the mid-main body 210. The cartridge 22 includes a hollow fiber membrane bundle 221. The hollow fiber membrane bundle 221 may be coupled to the cartridge 22 and modularized. Accordingly, through a process of coupling the cartridge 22 to the mid-case 21, the hollow fiber membrane bundle 221 may be installed inside the mid-case 21. Therefore, the fuel cell humidifier 1 according to the present invention can improve ease of an installation task, a separation task, and a replacement task for the hollow fiber membrane bundle 221. The hollow fiber membrane bundle 221 may include a plurality of hollow fiber membranes. The hollow fiber membranes may each include a hollow for passing the second gas.

The cartridge 22 may include an inner case 222.

The inner case 222 has openings at both ends, and the hollow fiber membrane bundle 221 is placed therein. The hollow fiber membrane bundle 221 may be disposed inside the inner case 222 and modularized. The hollow fiber membrane bundle 221 may include a polymer membrane formed of a polysulfone resin, a polyethersulfone resin, a sulfonated polysulfone resin, a polyvinylidene fluoride (PVDF) resin, a polyacrylonitrile (PAN) resin, a polyimide resin, a polyamide resin, a polyesterimide resin, or a mixture of two or more thereof.

The cartridge 22 may include a first fixing layer 223. The first fixing layer 223 fixes one end of the hollow fiber membrane bundle 221. The first fixing layer 223 may close the opening formed at one end of the inner case 222. In this case, the first fixing layer 223 may be formed to not block the hollows of the hollow fiber membranes. The first fixing layer 223 may be formed by curing a liquid resin, such as a liquid polyurethane resin, through a casting process. The first fixing layer 223 may have one portion located inside the inner case 222 and another portion protruding to the outside of the inner case 222. The first fixing layer 223 may fix the one end of the hollow fiber membrane bundle 221 and the inner case 222.

The cartridge 22 may include a second fixing layer 224. The second fixing layer 224 fixes the other end of the hollow fiber membrane bundle 221. The second fixing layer 224 may close the opening formed at the other end of the inner case 222. In this case, the second fixing layer 224 may be formed to not block the hollows of the hollow fiber membranes. The second fixing layer 224 may be formed by curing a liquid resin, such as a liquid polyurethane resin, through a casting process. The second fixing layer 224 may have one portion located inside the inner case 222 and another portion protruding to the outside of the inner case 222. The second fixing layer 224 may fix the other end of the hollow fiber membrane bundle 221 and the inner case 222. Since the second fixing layer 224 and the first fixing layer 223 are formed to not block the hollows of the hollow fiber membranes, the second gas may be supplied to the hollows of the hollow fiber membranes without being interfered with by the second fixing layer 224 and the first fixing layer 223 and may flow out from the hollows of the hollow fiber membranes without being interfered with by the second fixing layer 224 and the first fixing layer 223.

Referring to FIGS. 2 to 6, the cartridge 22 may include an inner inlet 225 and an inner outlet 226.

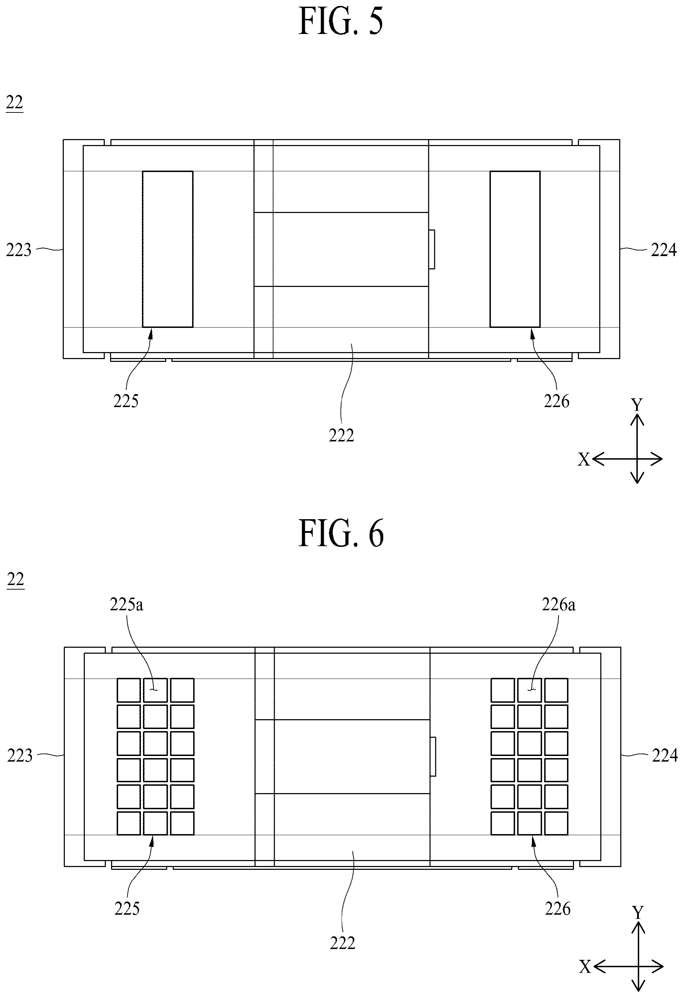

The inner inlet 225 is formed in the inner case 222. The inner inlet 225 may be formed in one surface of the inner case 222. The one surface of the inner case 222 may be disposed toward any one sidewall among sidewalls of the mid-case 21. The inner inlet 225 may allow the first gas to flow into the inner case 222. The inner inlet 225 may be formed to pass through the inner case 222. As illustrated in FIG. 5, the inner inlet 225 may be implemented as one through-hole that passes through the inner case 222. As illustrated in FIG. 6, the inner inlet 225 may be implemented as a plurality of through-holes that pass through the inner case 222. In this case, the inner inlet 225 may include a plurality of inflow windows 225a formed to pass through different portions of the inner case 222. The inflow windows 225a may be disposed to constitute a matrix form by being spaced from each other in each of the first axial direction (X-axis direction) and a second axial direction (Y-axis direction). The second axial direction (Y-axis direction) and the first axial direction (X-axis direction) are axial directions disposed perpendicular to each other.

The inner outlet 226 is formed in the inner case 222. The inner outlet 226 may be formed in one surface of the inner case 222. The inner outlet 226 may allow the first gas to flow out from inside the inner case 222. The inner outlet 226 may be formed to pass through the inner case 222. As illustrated in FIG. 5, the inner outlet 226 may be implemented as one through-hole that passes through the inner case 222. As illustrated in FIG. 6, the inner outlet 226 may be implemented as a plurality of through-holes that pass through the inner case 222. In this case, the inner outlet 226 may include a plurality of outflow windows 226a formed to pass through different portions of the inner case 222. The outflow windows 226a may be disposed to constitute a matrix form by being spaced from each other in each of the first axial direction (X-axis direction) and the second axial direction (Y-axis direction). The inner outlet 226 and the inner inlet 225 may be disposed at positions spaced from each other in the first axial direction (X-axis direction).

When the first gas is a wet gas, the first gas may be supplied between an inner surface of the mid-case 21 and an outer surface of the cartridge 22 through the mid-inlet 212, may be supplied to the inside of the cartridge 22 through the inner inlet 225, and may come into contact with outer surfaces of the hollow fiber membranes of the hollow fiber membrane bundle 221. In this process, moisture contained in the first gas may permeate through the hollow fiber membranes of the hollow fiber membrane bundle 221, thereby humidifying the second gas flowing along the hollows of the hollow fiber membranes of the hollow fiber membrane bundle 221. The humidified second gas may flow out from the hollow fiber membrane bundle 221 and then may be supplied to the fuel cell stack through the first cap 3 or the second cap 4. After the second gas is humidified, the first gas may flow out between the outer surface of the cartridge 22 and the inner surface of the mid-case 21 through the inner outlet 226 and may flow to the outside of the mid-case 21 through the mid-outlet 213. In this case, the first gas may be an off-gas discharged from the fuel cell stack.

When the first gas is a dry gas, the first gas may be supplied between the inner surface of the mid-case 21 and the outer surface of the cartridge 22 through the mid-inlet 212, may be supplied to the inside of the cartridge 22 through the inner inlet 225, and may come into contact with the outer surfaces of the hollow fiber membranes of the hollow fiber membrane bundle 221. In this process, moisture of the second gas flowing along the hollows of the hollow fiber membranes of the hollow fiber membrane bundle 221 may permeate through the hollow fiber membranes of the hollow fiber membrane bundle 221, thereby humidifying the first gas flowing into the cartridge 22. The humidified first gas may flow out between the outer surface of the cartridge 22 and the inner surface of the mid-case 21 through the inner outlet 226, may flow to the outside of the mid-case 21 through the mid-outlet 213, and then may be supplied to the fuel cell stack. After the first gas is humidified, the second gas may flow out from the hollow fiber membrane bundle 221 and then may flow to the outside through the first cap 3 or the second cap 4. In this case, the second gas may be an off-gas discharged from the fuel cell stack.

The humidification module 2 may include a first packing 23.

The first packing 23 is hermetically coupled to one end of the mid-case 21 through mechanical assembly. Accordingly, the first packing 23 may allow the first cap 3 to fluidly communicate only with the hollow fiber membrane bundle 221. Therefore, the first packing 23 may prevent the first gas and the second gas from being directly mixed. By being disposed between the mid-case 21 and the cartridge 22, the first packing 23 may seal between the mid-case 21 and the cartridge 22. In this case, the cartridge 22 may be inserted into a first insertion hole 231 formed in the first packing 23. The first packing 23 may be in contact with each of the inner surface of the mid-case 21, the outer surface of the cartridge 22, and the first fixing layer 223. Through this contact, the first packing 23 may be hermetically coupled to the one end of the mid-case 21. In this case, the first packing 23 may also be in contact with each of a portion of the inner surface of the mid-case 21, a portion of the outer surface of the cartridge 22, and a portion of the first fixing layer 223.

The humidification module 2 may include a second packing 24.

The second packing 24 is hermetically coupled to the other end of the mid-case 21 through mechanical assembly. Accordingly, the second packing 24 may allow the second cap 4 to fluidly communicate only with the hollow fiber membrane bundle 221. Therefore, the second packing 24 may prevent the first gas and the second gas from being directly mixed. By being disposed between the mid-case 21 and the cartridge 22, the second packing 24 may seal between the mid-case 21 and the cartridge 22. In this case, the cartridge 22 may be inserted into a second insertion hole 241 formed in the second packing 24. The second packing 24 may be in contact with each of the inner surface of the mid-case 21, the outer surface of the cartridge 22, and the second fixing layer 224. Through this contact, the second packing 24 may be hermetically coupled to the other end of the mid-case 21. In this case, the second packing 24 may also be in contact with each of a portion of the inner surface of the mid-case 21, a portion of the outer surface of the cartridge 22, and a portion of the second fixing layer 224.

Referring to FIGS. 2 to 4, the first cap 3 is coupled to the one end of the humidification module 2. A space between the first cap 3 and the cartridge 22 may be sealed relative to a space between the cartridge 22 and the mid-case 21 by the first packing 23. The first cap 3 may include a first port 31. The first port 31 is for allowing the second gas to flow. The first port 31 may communicate with the hollows of the hollow fiber membranes of the hollow fiber membrane bundle 221. Accordingly, in a process in which the second gas flows between the first cap 3 and the hollow fiber membrane bundle 221, the second gas may flow in or out through the first port 31.

Referring to FIGS. 2 to 4, the second cap 4 is coupled to the other end of the humidification module 2. The second cap 4 may be disposed at a position spaced from the first cap 3 in the first axial direction (X-axis direction). A space between the second cap 4 and the cartridge 22 may be sealed relative to the space between the cartridge 22 and the mid-case 21 by the second packing 24. The second cap 4 may include a second port 41. The second port 41 is for allowing the second gas to flow. The second port 41 may communicate with the hollows of the hollow fiber membranes of the hollow fiber membrane bundle 221. Accordingly, in a process in which the second gas flows between the second cap 4 and the hollow fiber membrane bundle 221, the second gas may flow in or out through the second port 41. When the second gas flows in through the second port 41, the second gas may flow out through the first port 31. In this case, the second gas may exchange moisture with the first gas while sequentially passing through the second cap 4, the hollows of the hollow fiber membranes of the hollow fiber membrane bundle 221, and the first cap 3. When the second gas flows out through the second port 41, the second gas may flow in through the first port 31. In this case, the second gas may exchange moisture with the first gas while sequentially passing through the first cap 3, the hollows of the hollow fiber membranes of the hollow fiber membrane bundle 221, and the second cap 4. Although not illustrated, resin layers may be formed on both ends of the mid-case 21, in place of the packings 23 and 24. The resin layers may be formed by curing a liquid polymer, such as a liquid polyurethane resin, through a casting scheme.

Here, the inner case 222 of the cartridge 22 may be manufactured using a mold. In this case, when the humidification performance that a place of use requires changes, the size of the inner case 222 should also be changed. Accordingly, since a mold for manufacturing the inner case 222 should also be newly developed and fabricated, manufacturing costs may become excessively high. For the fuel cell humidifier 1 according to the present invention to have humidification performance required by a place of use while reducing the manufacturing costs, the cartridge 22 of the fuel cell humidifier 1 according to the present invention may be implemented as follows.

Referring to FIGS. 2 to 9, the inner case 222 may include a central case 5, a first variable case 6, and a second variable case 7.

The central case 5 may accommodate the hollow fiber membrane bundle 221. The central case 5 may be disposed between the first variable case 6 and the second variable case 7 in the first axial direction (X-axis direction). In this case, one side of the central case 5 and the first variable case 6 may be disposed to partially overlap in the first axial direction (X-axis direction). The other side of the central case 5 and the second variable case 7 may be disposed to partially overlap in the first axial direction (X-axis direction). The hollow fiber membrane bundle 221 may be disposed to protrude to both sides of the central case 5. One side of the hollow fiber membrane bundle 221 that protrudes from one side of the central case 5 may be accommodated in the first variable case 6. The other side of the hollow fiber membrane bundle 221 that protrudes from the other side of the central case 5 may be accommodated in the second variable case 7.

The inner inlet 225 may be formed in the first variable case 6. When the inner inlet 225 includes the inflow windows 225a, the inflow windows 225a may be formed to pass through different portions of the first variable case 6. The first gas may flow into the first variable case 6 through the inner inlet 225.

The inner outlet 226 may be formed in the second variable case 7. When the inner outlet 226 includes the outflow windows 226a, the outflow windows 226a may be formed to pass through different portions of the second variable case 7. The first gas may flow out from inside the second variable case 7 through the inner outlet 226.

At least one of the second variable case 7 and the first variable case 6 may be movably coupled to the central case 5. Accordingly, a separation distance at which the inner inlet 225 and the inner outlet 226 are spaced from each other may be implemented to be changeable in the first axial direction (X-axis direction). Therefore, the fuel cell humidifier 1 according to the present invention can be implemented to have various humidification capabilities.

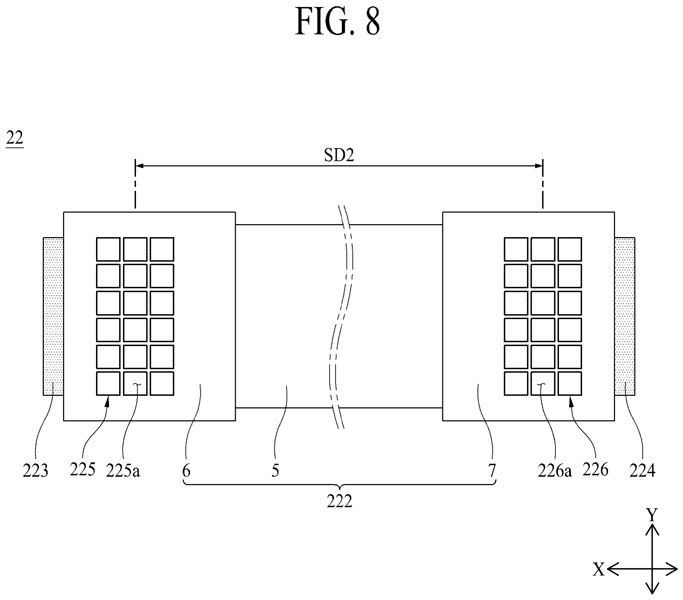

For example, compared to a first embodiment in which the inner inlet 225 and the inner outlet 226 are spaced from each other at a first separation distance SD1 as illustrated in FIG. 7, in a second embodiment in which the inner inlet 225 and the inner outlet 226 are spaced at a second separation distance SD2 longer than the first separation distance SD1 as illustrated in FIG. 8, a movement distance that the first gas should move until flowing to the outside of the inner case 222 through the inner outlet 226 after flowing into the inner case 222 through the inner inlet 225 may increase. Accordingly, since a residence time during which the first gas resides inside the inner case 222 increases, the humidification performance of the cartridge 22 may be enhanced. Therefore, the fuel cell humidifier 1 according to the present invention can be implemented to be suitable for a fuel cell used in a place of use that requires high humidification performance.

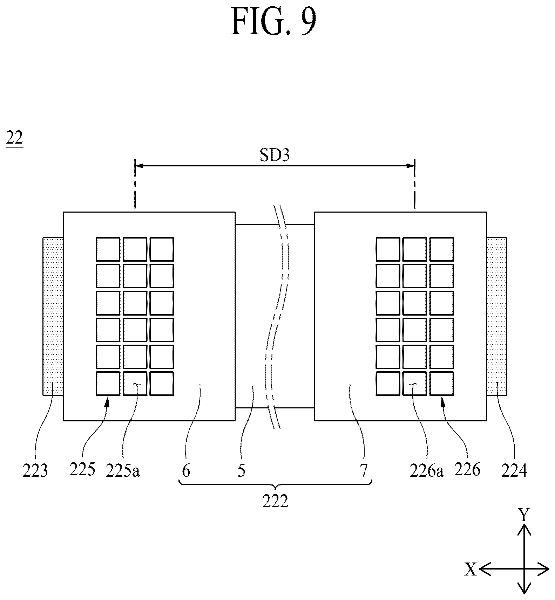

For example, compared to the first embodiment in which the inner inlet 225 and the inner outlet 226 are spaced from each other at the first separation distance SD1 as illustrated in FIG. 7, in a third embodiment in which the inner inlet 225 and the inner outlet 226 are spaced at a third separation distance SD3 shorter than the first separation distance SD1 as illustrated in FIG. 9, a movement distance that the first gas should move until flowing to the outside of the inner case 222 through the inner outlet 226 after flowing into the inner case 222 through the inner inlet 225 may decrease. Accordingly, since the residence time during which the first gas resides inside the inner case 222 decreases, the humidification performance of the cartridge 22 may be implemented to be suitable for humidification performance required by a place of use. Therefore, the fuel cell humidifier 1 according to the present invention can be implemented to have humidification performance suitable for a fuel cell used in a place of use.

In this way, in the cartridge 22, the separation distance between the inner inlet 225 and the inner outlet 226 may be changed by changing a coupling position of at least one of the second variable case 7 and the first variable case 6 to the central case 5, and in this way, the fuel cell humidifier 1 according to the present invention can be implemented to have various humidification capabilities according to the residence time of the first gas. Therefore, the fuel cell humidifier 1 according to the present invention may have improved versatility that allows application to fuel cells used in various places of use. In addition, even when the humidification performance that a place of use requires changes, the fuel cell humidifier 1 according to the present invention can have humidification performance corresponding to the humidification performance required by the place of use through changing a relative coupling position of at least one of the first variable case 6 and the second variable case 7 to the central case 5, without a need to newly develop or fabricate a mold for manufacturing the central case 5, the first variable case 6, and the second variable case 7. That is, the fuel cell humidifier 1 according to the present invention can be implemented so that the central case, the first variable case, and the second variable case are used in common in various places of use. Therefore, the fuel cell humidifier 1 according to the present invention can be implemented to have humidification performance required by a place of use while reducing manufacturing costs.

Meanwhile, when the coupling position of at least one of the second variable case 7 and the first variable case 6 to the central case 5 is changed, the overall length of the inner case 222 changes in the first axial direction (X-axis direction). In response, the hollow fiber membrane bundle 221 and the mid-case 21 may be manufactured to have a length that corresponds to the changed length of the inner case 222. In this case, after the hollow fiber membrane bundle 221 is manufactured to have the length that corresponds to the changed length of the inner case 222, both ends of the hollow fiber membrane bundle 221 may be disposed to protrude from the central case 5. After the first variable case 6 and the second variable case 7 are coupled to the central case 5 and coupling positions are fixed, one end of the hollow fiber membrane bundle 221 may be fixed to the first variable case 6 by the first fixing layer 223, and the other end of the hollow fiber membrane bundle 221 may be fixed to the second variable case 7 by the second fixing layer 224.

The cartridge 22 may be implemented so that humidification performance is determined according to a separation distance at which the inner inlet 225 and the inner outlet 226 are spaced from each other in the first axial direction (X-axis direction). In this case, the cartridge 22 may be implemented so that an inflow area through which the first gas flows in through the inner inlet 225 and an outflow area through which the first gas flows out through the inner outlet 226 are formed to be equal to each other. Accordingly, the fuel cell humidifier 1 according to the present invention may have further improved ease and accuracy in a task of adjusting the humidification performance according to the separation distance at which the inner inlet 225 and the inner outlet 226 are spaced from each other in the first axial direction (X-axis direction). In this case, when the inner inlet 225 includes a plurality of inner inlets 225a and the inner outlet 226 includes a plurality of inner outlets 226a, the inner inlets 225a and the inner outlets 226a may be formed to have areas equal to each other and may be formed equal in number to each other. Meanwhile, the cartridge 22 may be implemented so that the inflow area and the outflow area are formed to be different from each other.

Referring to FIGS. 2 to 12, when the first variable case 6 is movably coupled to one side of the central case 5, the cartridge 22 may include a first limiting portion 8.

The first limiting portion 8 may limit the movement of the first variable case 6. Since the movement of the first variable case 6 is limited by the first limiting portion 8, the fuel cell humidifier 1 according to the present invention can prevent the first variable case 6 from arbitrarily moving due to an external force generated due to vibration, shaking, or the like. Therefore, since the separation distance between the inner inlet 225 and the inner outlet 226 can be firmly maintained in an adjusted state, humidification performance suitable for a fuel cell used in a place of use can be maintained in the fuel cell humidifier 1 according to the present invention.

Referring to FIG. 10, the first limiting portion 8 may include a first limiting protrusion 81 and a plurality of first limiting grooves 82.

The first limiting protrusion 81 may protrude from the first variable case 6. At a portion where the first variable case 6 and the central case 5 overlap, the first limiting protrusion 81 may protrude from an inner surface of the first variable case 6 that faces the central case 5.

The first limiting protrusion 81 may limit the movement of the first variable case 6 by being inserted into any one of the first limiting grooves 82. Accordingly, the first limiting portion 8 can prevent the first variable case 6 from arbitrarily moving due to an external force generated due to vibration, shaking, or the like. The first limiting protrusion 81 may be formed to have a form in which a portion that protrudes more from the first variable case 6 has a smaller size. For example, the first limiting protrusion 81 may be formed to have a circular cross-section in which a portion that protrudes more from the first variable case 6 has a smaller size. The first limiting protrusion 81 may be formed to have a polygonal cross-section such as a triangular cross-section or a trapezoidal cross-section in which a portion that protrudes more from the first variable case 6 has a smaller size.

The first limiting grooves 82 may be formed in the central case 5. The first limiting grooves 82 may be disposed apart from one another in the first axial direction (X-axis direction). Therefore, as the first variable case 6 moves, the first limiting groove 82 into which the first limiting protrusion 81 is inserted may change. The first limiting grooves 82 may each be formed to have a form that is complementary to the first limiting protrusion 81. The first limiting grooves 82 may be formed in an outer surface of the central case 5. When the central case 5 is formed in a rectangular parallelepiped shape of which both ends are open in the first axial direction (X-axis direction) as a whole, the first limiting grooves 82 may be formed in at least one side surface among the four side surfaces of the central case 5. In this case, the first limiting protrusion 81 may be formed on an inner surface of the first variable case 6 that faces the side surface of the central case 5 in which the first limiting grooves 82 are formed.

Although an embodiment in which the first limiting protrusion 81 is formed on the first variable case 6 and the first limiting grooves 82 are formed in the central case 5 has been described above, as illustrated in FIG. 11, the first limiting protrusion 81 may be formed as a plurality of first limiting protrusions 81 on the central case 5, and at least one first limiting groove 82 may be formed in the first variable case 6. In this case, the first limiting protrusions 81 may be formed to protrude from an outer surface of the central case 5. The first limiting protrusions 81 may be disposed apart from one another in the first axial direction (X-axis direction). The first limiting groove 82 may be formed in an inner surface of the first variable case 6 that faces the central case 5 at the portion where the first variable case 6 and the central case 5 overlap.

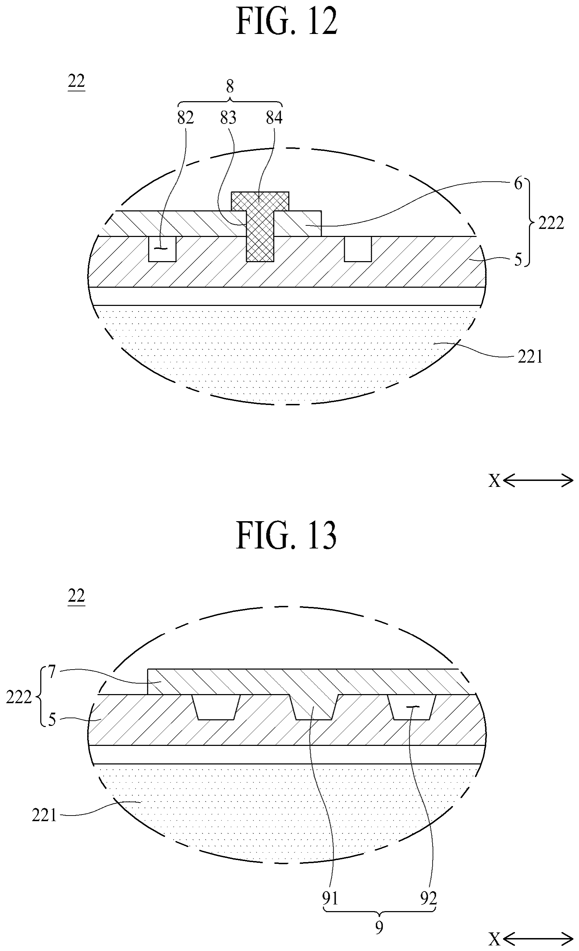

Referring to FIG. 12, the first limiting portion 8 may include the first limiting grooves 82, a first limiting hole 83, and a first limiting member 84.

The first limiting grooves 82 may be formed in the central case 5. The first limiting grooves 82 may be disposed apart from one another in the first axial direction (X-axis direction). The first limiting grooves 82 may be formed in an outer surface of the central case 5.

The first limiting hole 83 may be formed in the first variable case 6. The first limiting hole 83 may be formed to pass through the first variable case 6. The first limiting hole 83 may be formed to pass through the first variable case 6 at the portion where the first variable case 6 and the central case 5 overlap. As the first variable case 6 moves, the first limiting hole 83 may be connected to any one of the first limiting grooves 82. In this case, according to the position of the first variable case 6 relative to the central case 5, the first limiting groove 82 connected to the first limiting hole 83 may change.

The first limiting member 84 may be detachably coupled to the first variable case 6 and the central case 5. When the first limiting hole 83 is connected to any one of the first limiting grooves 82, the first limiting member 84 may limit the movement of the first variable case 6 by being inserted into the first variable case 6 and the central case 5 through the first limiting hole 83 and the first limiting groove 82 connected to each other. The first limiting member 84 may be inserted into the first variable case 6 and the central case 5 through the first limiting hole 83 and the first limiting groove 82 connected to each other in an interference fit manner.

The first limiting member 84 may limit the movement of the first variable case 6 by being fastened to the first variable case 6 and the central case 5 through screw coupling. In this case, screw threads may be formed on an outer surface of the first limiting member 84 inserted into the first limiting hole 83 and the first limiting groove 82. Screw threads that correspond to the screw threads formed on the outer surface of the first limiting member 84 may be formed on the first limiting groove 82. Screw threads that correspond to the screw threads formed on the outer surface of the first limiting member 84 may also be formed on the first limiting hole 83. In a state in which the first limiting hole 83 and any one of the first limiting grooves 82 are connected to each other due to the movement of the first variable case 6, the first limiting member 84 may limit the movement of the first variable case 6 by being fastened to the first variable case 6 and the central case 5.

Referring to FIGS. 2 to 15, when the second variable case 7 is movably coupled to one side of the central case 5, the cartridge 22 may include a second limiting portion 9.

The second limiting portion 9 may limit the movement of the second variable case 7. Since the movement of the second variable case 7 is limited by the second limiting portion 9, the fuel cell humidifier 1 according to the present invention can prevent the second variable case 7 from arbitrarily moving due to an external force generated due to vibration, shaking, or the like. Therefore, since the separation distance between the inner inlet 225 and the inner outlet 226 can be firmly maintained in an adjusted state, humidification performance suitable for a fuel cell used in a place of use can be maintained in the fuel cell humidifier 1 according to the present invention.

Referring to FIG. 13, the second limiting portion 9 may include a second limiting protrusion 91 and a plurality of second limiting grooves 92.

The second limiting protrusion 91 may protrude from the second variable case 7. At a portion where the second variable case 7 and the central case 5 overlap, the second limiting protrusion 91 may protrude from an inner surface of the second variable case 7 that faces the central case 5.

The second limiting protrusion 91 may limit the movement of the second variable case 7 by being inserted into any one of the second limiting grooves 92. Accordingly, the second limiting portion 9 can prevent the second variable case 7 from arbitrarily moving due to an external force generated due to vibration, shaking, or the like. The second limiting protrusion 91 may be formed to have a form in which a portion that protrudes more from the second variable case 7 has a smaller size. For example, the second limiting protrusion 91 may be formed to have a circular cross-section in which a portion that protrudes more from the second variable case 7 has a smaller size. The second limiting protrusion 91 may be formed to have a polygonal cross-section such as a triangular cross-section or a trapezoidal cross-section in which a portion that protrudes more from the second variable case 7 has a smaller size.

The second limiting grooves 92 may be formed in the central case 5. The second limiting grooves 92 may be disposed apart from one another in the first axial direction (X-axis direction). Therefore, as the second variable case 7 moves, the second limiting groove 92 into which the second limiting protrusion 91 is inserted may change. The second limiting grooves 92 may each be formed to have a form that is complementary to the second limiting protrusion 91. The second limiting grooves 92 may be formed in an outer surface of the central case 5. When the central case 5 is formed in a rectangular parallelepiped shape of which both ends are open in the first axial direction (X-axis direction) as a whole, the second limiting grooves 92 may be formed in at least one side surface among the four side surfaces of the central case 5. In this case, the second limiting protrusion 91 may be formed on an inner surface of the second variable case 7 that faces the side surface of the central case 5 in which the second limiting grooves 92 are formed.

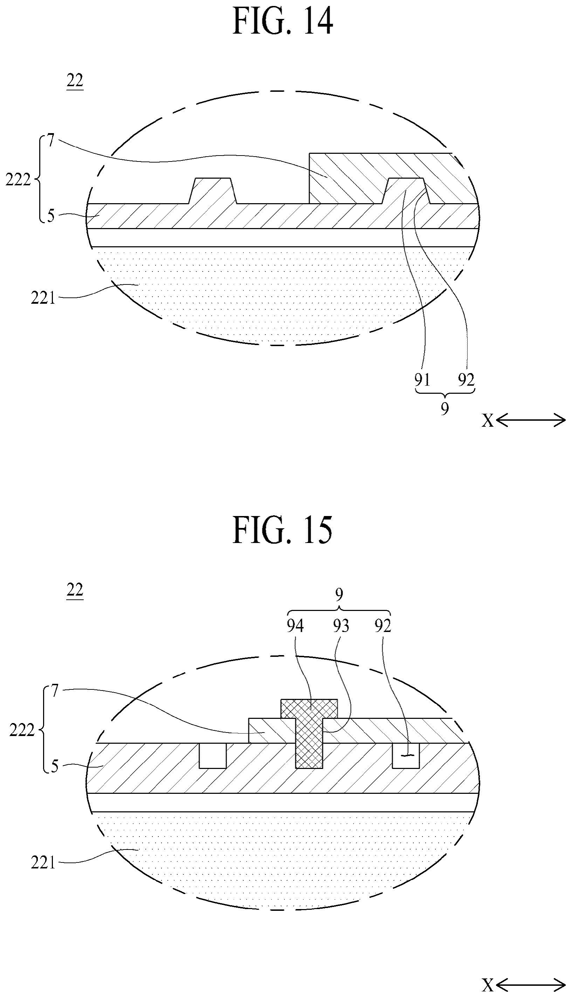

Although an embodiment in which the second limiting protrusion 91 is formed on the second variable case 7 and the second limiting grooves 92 are formed in the central case 5 has been described above, as illustrated in FIG. 14, the second limiting protrusion 91 may be formed as a plurality of second limiting protrusions 91 on the central case 5, and at least one second limiting groove 92 may be formed in the second variable case 7. In this case, the second limiting protrusions 91 may be formed to protrude from an outer surface of the central case 5. The second limiting protrusions 91 may be disposed apart from one another in the first axial direction (X-axis direction). The second limiting groove 92 may be formed in an inner surface of the second variable case 7 that faces the central case 5 at the portion where the second variable case 7 and the central case 5 overlap.

Referring to FIG. 15, the second limiting portion 9 may include the second limiting grooves 92, a second limiting hole 93, and a second limiting member 94.

The second limiting grooves 92 may be formed in the central case 5. The second limiting grooves 92 may be disposed apart from one another in the first axial direction (X-axis direction). The second limiting grooves 92 may be formed in an outer surface of the central case 5.

The second limiting hole 93 may be formed in the second variable case 7. The second limiting hole 93 may be formed to pass through the second variable case 7. The second limiting hole 93 may be formed to pass through the second variable case 7 at the portion where the second variable case 7 and the central case 5 overlap. As the second variable case 7 moves, the second limiting hole 93 may be connected to any one of the second limiting grooves 92. In this case, according to the position of the second variable case 7 relative to the central case 5, the second limiting groove 92 connected to the second limiting hole 93 may change.

The second limiting member 94 may be detachably coupled to the second variable case 7 and the central case 5. When the second limiting hole 93 is connected to any one of the second limiting grooves 92, the second limiting member 94 may limit the movement of the second variable case 7 by being inserted into the second variable case 7 and the central case 5 through the second limiting hole 93 and the second limiting groove 92 connected to each other. The second limiting member 94 may be inserted into the second variable case 7 and the central case 5 through the second limiting hole 93 and the second limiting groove 92 connected to each other in an interference fit manner.

The second limiting member 94 may limit the movement of the second variable case 7 by being fastened to the second variable case 7 and the central case 5 through screw coupling. In this case, screw threads may be formed on an outer surface of the second limiting member 94 inserted into the second limiting hole 93 and the second limiting groove 92. Screw threads that correspond to the screw threads formed on the outer surface of the second limiting member 94 may be formed on the second limiting groove 92. Screw threads that correspond to the screw threads formed on the outer surface of the second limiting member 94 may also be formed on the second limiting hole 93. In a state in which the second limiting hole 93 and any one of the second limiting grooves 92 are connected to each other due to the movement of the second variable case 7, the second limiting member 94 may limit the movement of the second variable case 7 by being fastened to the second variable case 7 and the central case 5.

The present invention that has been described above is not limited to the above-described embodiments and the accompanying drawings, and it should be apparent to those of ordinary skill in the art to which the present invention pertains that various substitutions, modifications, and changes are possible within the scope not departing from the technical idea of the present invention.

## Claims

1. A cartridge for a fuel cell humidifier that is provided in a fuel cell humidifier that uses a wet gas to humidify a dry gas to be supplied to a fuel cell stack, the cartridge comprising:
an inner case having openings at both ends; and
a hollow fiber membrane bundle placed in the inner case,
wherein the inner case includes a first variable case in which an inner inlet for inflow of a first gas is formed, a second variable case disposed apart from the first variable case in a first axial direction and in which an inner outlet for outflow of the first gas is formed, and a central case to which at least one of the first variable case and the second variable case is movably coupled.

2. The cartridge of claim 1, wherein humidification performance is determined according to a separation distance at which the inner inlet and the inner outlet are spaced from each other in the first axial direction.

3. The cartridge of claim 1, further comprising:
a first fixing layer fixing one end of the hollow fiber membrane bundle and the first variable case; and
a second fixing layer fixing the other end of the hollow fiber membrane bundle and the second variable case,
wherein the hollow fiber membrane bundle has both ends disposed to protrude from the central case.

4. The cartridge of claim 1, further comprising a first limiting portion limiting movement of the first variable case,
wherein the first variable case is movably coupled to one side of the central case.

5. The cartridge of claim 1, further comprising a second limiting portion limiting movement of the second variable case,
wherein the second variable case is movably coupled to the other side of the central case.

6. A fuel cell humidifier comprising:
a humidification module using a wet gas to humidify a dry gas to be supplied to a fuel cell stack;
a first cap coupled to one end of the humidification module; and
a second cap coupled to the other end of the humidification module,
wherein the humidification module includes a mid-case of which both ends are open and at least one cartridge accommodated inside the mid-case,
the cartridge includes an inner case having openings at both ends and a hollow fiber membrane bundle placed in the inner case, and
the inner case includes a first variable case in which an inner inlet for inflow of a first gas is formed, a second variable case disposed apart from the first variable case in a first axial direction and in which an inner outlet for outflow of the first gas is formed, and a central case to which at least one of the first variable case and the second variable case is movably coupled.

7. The fuel cell humidifier of claim 6, wherein humidification performance of the cartridge is determined according to a separation distance at which the inner inlet and the inner outlet are spaced from each other in the first axial direction.

8. The fuel cell humidifier of claim 6, wherein:
the cartridge further includes a first fixing layer fixing one end of the hollow fiber membrane bundle and the first variable case and a second fixing layer fixing the other end of the hollow fiber membrane bundle and the second variable case; and
the hollow fiber membrane bundle has both ends disposed to protrude from the central case.

9. The fuel cell humidifier of claim 6, wherein:
the cartridge further includes a first limiting portion limiting movement of the first variable case; and
the first variable case is movably coupled to one side of the central case.

10. The fuel cell humidifier of claim 6, wherein:
the cartridge further includes a second limiting portion limiting movement of the second variable case; and
the second variable case is movably coupled to the other side of the central case.
